Europäisches Patentamt

European Patent Office

Office européen des brevets

(19)

(11) **EP 1 288 627 A2**

(12) **EUROPÄISCHE PATENTANMELDUNG**

| | |
|---|---|
| (43) Veröffentlichungstag:<br>**05.03.2003 Patentblatt 2003/10** | (51) Int Cl.$^7$: **G01C 21/36** |

(21) Anmeldenummer: **02018439.6**

(22) Anmeldetag: **16.08.2002**

| | |
|---|---|
| (84) Benannte Vertragsstaaten:<br>**AT BE BG CH CY CZ DE DK EE ES FI FR GB GR**<br>**IE IT LI LU MC NL PT SE SK TR**<br>Benannte Erstreckungsstaaten:<br>**AL LT LV MK RO SI** | (72) Erfinder: **Creuzburg, Uwe, Dr.**<br>**30161 Hannover (DE)** |
| (30) Priorität: **24.08.2001 DE 10141507** | (74) Vertreter: **Thielmann, Frank**<br>**AUDI AG,**<br>**Patentabteilung**<br>**85045 Ingolstadt (DE)** |
| (71) Anmelder: **AUDI AG**<br>**85045 Ingolstadt (DE)** | |

(54) **Vorrichtung zur Projektion von Navigationsdaten**

(57) Bei einer Vorrichtung (1) zur Projektion von Navigationsdaten, insbesondere in einem Fahrzeug, wobei innerhalb der Projektion (2) Bereiche (3, 4, 5) mit unterschiedlicher Skalierung vorgesehen sind, ändert sich die Skalierung der Bereiche (3, 4, 5) kontinuierlich und/oder schrittweise innerhalb der Projektion (2).

Entfernung Ziel: 12,3 km

*Fig.1*

EP 1 288 627 A2

## Beschreibung

Die Erfindung betrifft eine Vorrichtung zur Projektion von Navigationsdaten, insbesondere in einem Fahrzeug, wobei innerhalb der Projektion Bereiche mit unterschiedlicher Skalierung vorgesehen sind.

Derartige Vorrichtungen zur Projektion von Navigationsdaten sind im Stand der Technik bekannt. Hierbei wird zumeist eine Straßenkarte auf einer Anzeigeeinrichtung, insbesondere einem Display, in einem Fahrzeug dargestellt, wobei jeweils die aktuelle Position des Fahrzeugs in der Straßenkarte eingezeichnet ist. Außerdem wird zumeist ein eingebbarer Zielpunkt ebenfalls dargestellt sowie gegebenenfalls die Fahrtroute. Im Stand der Technik sind verschiedene Ansätze zur Darstellung solcher Navigationsdaten bekannt, wobei ein erster Ansatz diese ausschließlich mit einem festen Maßstab, also einer festen Skalierung, auf einer Anzeigeeinrichtung anzeigt. Die Auflösung dieser Darstellung kann manuell in fest eingestellten Rasterschritten vorgegeben werden und sich gegebenenfalls automatisch an die Umgebung anpassen. Beispielsweise ist im Bereich von Kreuzungen innerhalb von Städten eine Zoomfunktion möglich. Beispiele für derart gestalteter Vorrichtungen sind in der DE 43 36 513 A1, EP 0 678 731 A1 und EP 0 875 729 A3 offenbart. Aus der DE 43 36 513 A1 ist es bekannt, eine Karte mit einem Maßstab anzuzeigen, der die Momentan-Position eines Fahrzeugs und einen vorbestimmten Punkt einer Fahrtroute angibt, wenn sich das Fahrzeug nicht auf dieser bewegt. Hierbei wird der Maßstabsfaktor der Karte durch einen Maßstabsänderungsabschnitt festgelegt, um die Darstellung der Momentan-Position und des Anfangspunktes der Fahrtstreckenermittlung auf einem Bild zu ermöglichen.

Aus der EP 0 875 729 A3 ist es bekannt, eine Anzeigevorrichtung zum Anzeigen eines Cursors in Verbindung mit einer Karteninformation und einer Markierungsinformation vorzusehen, so dass der Cursor die Markierungsinformation auf der Karte anzeigt. Dies geschieht durch Reduzierung des Maßstabs der Karte, um die Markierung innerhalb des Anzeigebereichs darzustellen, sofern festgestellt wird, dass die Markierung nicht innerhalb des Anzeigebereichs liegt.

Gemäß der EP 0 678 731 A1 wird eine Vogelflugperspektive von verschiedenen Sichtpunkten aus und mit unterschiedlichem Skalierungsbereich entsprechend der Fahrzeuggeschwindigkeit oder entsprechend dem Abstand der aktuellen Fahrzeugposition zu dem nächsten spezifizierten Verkehrspunkt angegeben. Es werden also verschiedene Straßenkarten aus der Vogelflugperspektive angezeigt, die von einem geeigneten Sichtpunkt aus und in geeignetem Skalierungsmaßstab zu jeder Zeit entsprechend den Verkehrsbedingungen des Fahrzeugs angezeigt werden können. Ein weiteres Beispiel einer dreidimensionalen Darstellung in Vogelflugperspektive ist aus der DE 195 44 921 A1 bekannt. Hierbei wird durch Variation des Grades der Anzeige von Einzelheiten einer Straßenkarte ein Gefühl von Tiefe für den Betrachter vermittelt. Dabei kann der Grad an Einzelheiten abnehmen, wenn die angezeigte Position des Bildschirms bezüglich des Anzeigerahmens höher gelegen ist.

Ein anderer Ansatz im Stand der Technik ist es, gleichzeitig einen Zoombereich, beispielsweise eine Kreuzung, und eine Übersichtskarte auf der gleichen Anzeigeeinrichtung, insbesondere einem Display, anzuzeigen. Die Auflösung der Darstellung kann dabei gegebenenfalls automatisch oder manuell variiert werden. Beispiele hierfür sind beispielsweise in der US 5,925,091, US 5,936,631 und US 5,699,255 zu finden. Gemäß der US 5,936,631 können entweder große Straßen in einer detaillierten Karte oder kleine Straße in einer großräumigen Karte angezeigt werden. Gemäß der US 5,925,091 ist lediglich die Anzeige der aktuell benutzten Straße in einer großräumigen Karte vorgesehen.

Die Anzeige lediglich eines festen Maßstabes bzw. die Auflösung einer Darstellung in manuell vorgebbaren festen Rasterschritten mit gegebenenfalls automatischer Anpassung an die Umgebung weist den Nachteil auf, dass das Anzeigen einer detailreichen Ansicht, beispielsweise einer Kreuzung, nur ohne eine großräumige Ansicht der Umgebung möglich ist. Hierbei geht für den Benutzer die geographische Orientierung beispielsweise an Flüssen etc. verloren, nämlich Informationen darüber, in welcher Richtung er sich bewegt und in welcher Richtung bzw. wo sich das von ihm angesteuerte Ziel befindet. Der Nachteil des gleichzeitigen Anzeigens eines Zoombereichs und einer Übersichtskarte auf ein und derselben Anzeigeeinrichtung mit gegebenenfalls automatisch oder manuell betätigter Variation der Auflösung, wie in dem zweiten Ansatz offenbart, löst zwar das vorstehend genannte Problem, jedoch ergeben sich weitere Nachteile dadurch, dass gegebenenfalls Teile der Übersichtskarte durch den Zoombereich verdeckt werden. Außerdem ist lediglich eine geringe Auflösung möglich, insbesondere mit einer kleinen unleserlichen Schriftgröße, wodurch der Informationsgehalt einer solchen Darstellung für den Benutzer stark eingeschränkt ist.

Der vorliegenden Erfindung liegt daher die Aufgabe zugrunde, eine Vorrichtung zur Projektion von Navigationsdaten vorzusehen, bei der die genannten Nachteile des Standes der Technik nicht mehr auftreten, also der Benutzer ein sehr hohes Maß an Informationsgehalt der dargestellten Karte entnehmen kann, sowohl im Nahbereich als auch im Fernbereich.

Die Aufgabe wird durch eine Vorrichtung zur Projektion von Navigationsdaten nach dem Oberbegriff des Anspruchs 1 dadurch gelöst, dass die Skalierung der Bereiche sich kontinuierlich und/oder schrittweise innerhalb der Projektion ändert. Weiterbildungen der Erfindung sind in den abhängigen Ansprüchen definiert.

Hierdurch wird vorteilhaft erreicht, dass ähnlich einer in verbreiterten Stadtplänen verwendeten hyperbolischen Projektion die Karten nicht mehr mit einem festen Maßstab dargestellt werden, sondern eine unterschiedliche Skalierung zwischen den einzelnen Bereichen, nämlich Nahbereich und Fernbereich, der Kartenprojektion möglich ist. Diese ändert sich über die Projektionsfläche hinweg derart, dass für den Betrachter ein optimaler Informationsgehalt gegeben ist, wobei insbesondere nicht durch einen Zoombereich Teile der Übersichtskarte verdeckt werden. Die momentan für den Benutzer relevanten Daten werden vorzugsweise vergrößert dargestellt, wobei dieser gleichzeitig einen Überblick über den Gesamtbereich der Umgebung, in der er sich befindet, erhält. Jeder Bereich der Projektion wird dabei dargestellt und nicht durch einen anderen verdeckt. Durch geeignete Wahl der Skalierungsvariation können ein Ausgangspunkt, die aktuelle Position und der angestrebte Zielpunkt in ein und derselben Projektion dargestellt werden.

Vorzugsweise ist die Skalierung an die sich ändernde Position dynamisch anpassbar. Hierdurch entsteht gegenüber Faltplänen der große Vorteil, dass keine fest eingestellte Skalierung, wie bei diesen nur möglich, vorgesehen werden kann, sondern eine sich stetig ändernde dynamische Anpassung an die jeweils aktuelle Position vorgenommen werden kann. Ist also beispielsweise über einen langen Zeitraum hinweg eine kreuzungsfreie Strecke zu befahren, kann die Skalierung grob sein. Muss hingegen häufig die Fahrtrichtung geändert werden, z.B. in Innenstädten, wird eine feine Skalierung gewählt. Hierdurch ist jeweils eine optimale Anpassung der Skalierung an die aktuellen Bedingungen möglich, wobei der Informationsgehalt für den Betrachter maximal ist.

Bevorzugt weist zumindest ein Bereich eine feinere Skalierung auf als andere, diese umgebende Bereiche der Projektion. Besonders bevorzugt ist der Bereich mit der feinsten Skalierung ein Nahbereich, insbesondere die aktuelle Position. Die feinste Skalierung bedeutet hierbei ein Zoom z.B. der aktuellen Position bzw. des Nahbereichs um die aktuelle Position herum. Die Bereiche, die diesen Nahbereich umgeben, weisen eine gröbere Skalierung auf, können jedoch untereinander unterschiedlich skaliert sein. Beispielsweise kann der Bereich einer zu fahrenden Straße oder Route feiner skaliert sein als die Bereiche, die innerhalb der Projektion nicht anzufahren sind. Hierdurch ist für den Betrachter jeweils sofort auffällig, welcher Bereich bzw. welche Bereiche für ihn interessant sind und welche lediglich der groben Orientierung dienen. Es reicht somit ein kurzer Blick auf die Projektion, um sowohl die aktuelle Position als auch die weitere Fahrtroute eindeutig und schnell erkennen zu können, was gerade bei Verwendung in einem Kraftfahrzeug besonders vorteilhaft ist, da der Fahrer des Fahrzeugs möglichst nicht von den Straßenverhältnissen abgelenkt wird.

Vorzugsweise ist eine lineare und/oder nicht lineare Änderung der Skalierung um zumindest einen Bereich, insbesondere den Nahbereich, herum vorgesehen. Es ist somit eine neue Abbildungsvorschrift gebildet, bei der eine Verzerrung der Projektion auftritt. Die Verzerrung kann innerhalb der Projektion sowohl linear als auch nichtlinear sein je nach dem, welche Darstellung für den Betrachter den optimalen Informationsgehalt enthält. Besonders bevorzugt ist es hierbei, wenn die Änderung der Skalierung um zumindest einen Bereich, insbesondere den Nahbereich, herum sich zirkular erstreckt. Da eine unterschiedliche Skalierung automatisch zu einer Verzerrung des Bildes führt, kann es je nach Anwendungsfall vorteilhaft sein, diese Verzerrung sich zirkular oder beispielsweise ellipsenförmig um den aktuellen Positionsbereich herum erstrecken zu lassen, um dem Betrachter ein schnell und einfach erfassbares Bild zur Orientierung zu geben. Es kann alternativ jedoch auch eine nicht zirkulare Erstreckung der unterschiedlichen Skalierung vorgesehen werden, z.B. wenn die Skalierung in einer Richtung feiner sein soll als in den anderen.

Vorzugsweise ist der Grad der Veränderung der Skalierung parametrisierbar und/oder einstellbar. Besonders bevorzugt ist der Grad der Veränderung zwischen 0 und 1 wählbar, insbesondere gibt 0 eine nicht vorhandene Veränderung und 1 eine maximale Veränderung an. Unter der Parametrisierung wird somit insbesondere eine Zuordnung des Grades der Veränderung der Skalierung zu Zahlenwerten verstanden, also beispielsweise 0 und 1, um ein Maximum und ein Minimum sowie Zwischenschritte angeben zu können.

Durch eine vorzugsweise vorhandene Einstellmöglichkeit des Grades der Skalierungsveränderung können Maximum und Minimum verschoben werden, somit auch Zwischenschritte, wodurch durch den Benutzer ein für den jeweiligen Anwendungsfall optimaler Skalierungsbereich eingestellt werden kann. Dieser wird vorzugsweise vor Fahrtantritt eingestellt, kann jedoch auch bei Bedarf mühelos währenddessen verändert werden. Beispielsweise kann dies bei Durchfahren größerer Städte sinnvoll werden, um beispielsweise Einbahnstraßen oder dergleichen schneller erkennen zu können. Auch bei Kopplung mit einem Stauwarnsystem kann die Veränderung des Grades der Skalierung während der Fahrt sinnvoll sein, um Ausweichstrecken besser erkennen zu können. Die Einstellung des Grades der Veränderung der Skalierung kann auch automatisch erfolgen, beispielsweise bei Kopplung mit einem Stauwarnsystem oder ähnlichem.

Bevorzugt ist eine wählbare Maximalveränderung der Skalierung im Zentrum der Projektion vorgesehen oder vorsehbar. Hierbei ist also eine Maximalauflösung im Zentrum einer solchen Projektion möglich, die vom Benutzer vorgegeben werden kann. Das Zentrum bildet dabei beispielsweise die aktuelle Fahrzeugposition. Der Benutzer braucht dann nicht lange auf der Projektion nach der aktuellen Fahrzeugposition zu suchen, sondern bekommt diese jeweils im Bereich von deren Zentrum angezeigt. Alternativ ist es natürlich auch möglich, die aktuelle Fahrzeugposition über die Karte wandern zu lassen, wobei der Betrachter diese an der Maximalauflösung, also der Maximalveränderung der Skalierung der Projektion schnell erkennt. Vorzugsweise ist die Einstellung hierbei von dem Betrachter abhängig und kann personenspezifisch unterschiedlich mit ein und derselben Vorrichtung vorgenommen werden.

Vorzugsweise ist eine Maßstabsanzeigeeinrichtung, insbesondere ein Maßstabsbalken, Maßstabskreuz oder eine andere geeignete Maßstabsanzeigeeinrichtung, ausgehend von einem Bereich in der Projektion anzeigbar. Besonders bevorzugt ist die Maßstabsanzeigeeinrichtung von dem Bereich mit der maximalen Veränderung, insbesondere dem Zentrum der Projektion, aus anzeigbar. Durch das Einblenden einer solchen verzerrten Maßstabsanzeigeeinrichtung, insbesondere eines Maßstabsbalkens oder -kreuzes, können Entfernungen zwischen der aktuellen Position und dem Ziel besser abgeschätzt werden. In einer bevorzugten Ausführungsform wird die Entfernung ebenfalls auf der Projektion angezeigt oder kann auf Anforderung angezeigt werden.

Zur näheren Erläuterung der Erfindung wird im folgenden ein Ausführungsbeispiel anhand der Zeichnungen näher beschrieben. Diese zeigen in:

Figur 1 eine Draufsicht auf eine erfindungsgemäße Vorrichtung zur Projektion von Navigationsdaten, auf der eine Landkarte projiziert ist,

Figur 2 ein Ablaufschema für den Vorgang der Fahrtroutenverfolgung und Darstellung von Navigationsdaten auf einer Projektion gemäß Figur 1, und

Figur 3 eine Darstellung dreier Abbildungsvorschriften zur Projektion der Navigationsdaten.

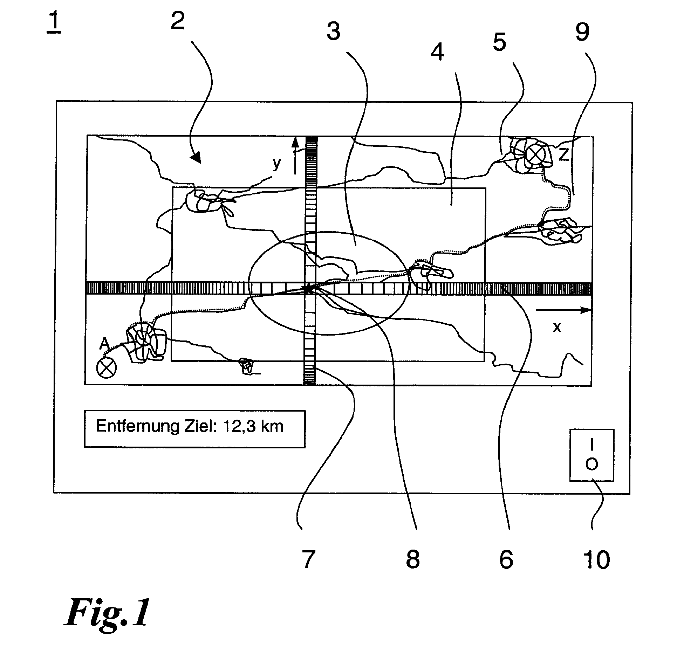

In Figur 1 ist eine erfindungsgemäße Vorrichtung 1 zur Projektion von Navigationsdaten gezeigt, auf der eine Landkarte projiziert ist. Die Landkarte als Projektion 2 ist in unterschiedliche Bereiche 3, 4, 5 aufgeteilt. Der Bereich 3 ist dabei der Nahbereich, der Bereich 4 der Zwischenbereich und der Bereich 5 der Fernbereich. Jeder dieser Bereiche weist unterschiedliche Skalierungen auf, die sich innerhalb der Bereiche ebenfalls ändern. Der Nahbereich 3 weist eine feinere Skalierung bzw. einen geringeren Maßstab auf als der Zwischenbereich 4 und dieser weist wiederum eine feinere Skalierung auf als der Fernbereich 5. Die Skalierung kann auch an zwei Maßstabsbalken 6, 7, die in x- und y-Richtung liegen, abgelesen werden. Innerhalb des Nahbereichs ist die aktuelle Position beispielsweise eines Fahrzeugs mit den Bezugszeichen 8 und einem Stern markiert. Die feine Skalierung des Nahbereichs ist im Bereich der aktuellen Position 8 am feinsten und wird in Richtung zu dem den Nahbereich umgebenden Zwischenbereich 4 grober, also der Maßstab größer.

Mit der Bewegung beispielsweise des Fahrzeugs, also der Veränderung der aktuellen Position 8, wandert die Feinstskalierung mit dieser Position mit, so dass auch der Nahbereich 3 und der Zwischenbereich 4 über die Projektion 2 hinweg wandern. Hierbei kann entweder eine Verschiebung über die angezeigte Projektion hinweg erfolgen, so dass ein Bild entsteht, das ähnlich einer Lupe über die Fahrtroute 9, die von einem Anfangspunkt A zu einem Zielpunkt Z führt, verschoben wird. Die Fahrtroute 9 ist in Figur 1 punktiert dargestellt.

Die sich durch die unterschiedlichen Skalierungen ergebende Verzerrung ändert sich zunächst elliptisch um die aktuelle Position 8 herum. Aus diesem Grunde ist die Abgrenzung zwischen Nahbereich und Zwischenbereich als Ellipse dargestellt. Die Abgrenzung zwischen Zwischenbereich und Fernbereich ist hingegen als Rechteck ausgebildet. In einer anderen Ausführungsform können jedoch auch unregelmäßige Figuren als Begrenzungen der Bereiche vorgesehen werden, sofern sich dies beispielsweise bei dem jeweiligen Gelände als vorteilhafter, da besser darstellbar und schneller erfassbar, erweist.

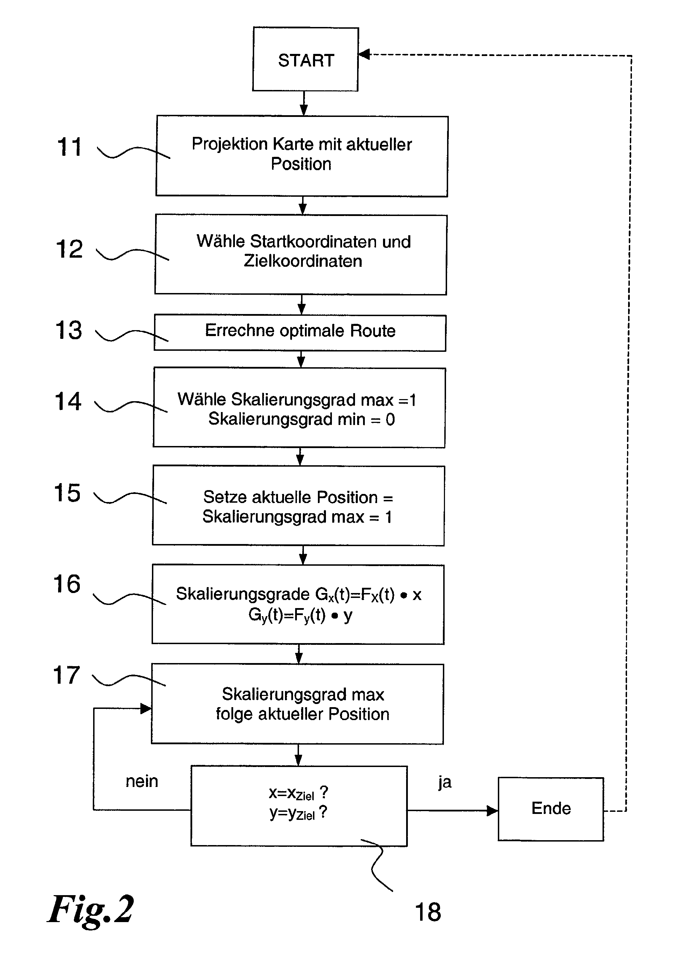

Der Skalierungsgrad um die aktuelle Position 8 herum kann von dem Benutzer vorgegeben werden. Hierbei wählt er aus einer vorgegebenen oder vorgebbaren Auswahl an Skalierungsmöglichkeiten eine für ihn passende aus und bestimmt hieraus den maximalen Grad der Veränderung der Skalierung, also die maximale Auflösung der Projektion bzw. Karte im Bereich der aktuellen Position. Außerdem kann er den minimalen Grad der Veränderung der Skalierung wählen, also den minimalen Grad an Verzerrung und zugleich die Minimalauflösung, die im Fernbereich vorliegen soll. Ein Abfrageschema für dieses Vorgehen ist in Figur 2 skizziert. Dies stellt nur ein mögliches Beispiel dar. Bei einem anderen Verfahren kann z.B. ein Zielspeicher vorgesehen werden.

In der dort skizzierten Ausführungsform wird, ausgehend von der Initiierung eines Programmstarts, insbesondere dem Einschalten der Vorrichtung 1 mittels eines Ein-/ Ausschalters 10, zunächst die aktuelle Position 8 auf einer entsprechenden Karte projiziert. Dieser Schritt ist mit dem Bezugszeichen 11 charakterisiert. In einem zweiten Schritt 12 werden die Start- und Zielkoordinaten der Fahrtroute gewählt. Hieraus errechnet eine Navigationseinrichtung eine geeignete Fahrtroute, was mit dem dritten Schritt 13 angedeutet ist. In einem vierten Schritt wird die Parametrisierung des Skalierungsgrades vorgenommen. Dieser mit dem Bezugszeichen 14 charakterisierte Schritt gibt die Möglichkeit, einen maximalen und einen minimaleren Skalierungsgrad zu wählen, in dem dargestellten Beispiel den maximalen Skalierungsgrad zu 1 und den minimalen zu 0. In einem fünften Schritt 15 wird die aktuelle Position dem Skalierungsgrad 1, also dem maximalen Skalierungsgrad, zugeordnet. In dem sechsten Schritt 16 werden die übrigen Punkte der Projektion einzelnen Skalierungsgraden zugeordnet nach den Formeln

$$G_x(t) = F_x(t) \cdot x$$

und

$$Gy(t) = F_y(t) \cdot y,$$

wobei $G_x(t)$ und $Gy(t)$ jeweils die zeitabhängigen Skalierungsgrade in x- und y-Richtung angeben und wobei $F_x(t)$ und $Fy(t)$ lineare und nicht lineare Funktionen sein können, die die Verzerrung bzw. Skalierungsänderung wiedergeben. Die Skalierungsänderung ist dabei zum einen abhängig von dem jeweiligen x- und y-Wert auf der Projektion und zum anderen von der Zeit, sofern die aktuelle Position sich über der Zeit ändert.

In einem siebten Schritt 17 ist vorgesehen, dass der maximale Skalierungsgrad der aktuellen Position folgt, so dass diese stets mit der maximal möglichen bzw. eingestellten maximalen Auflösung dargestellt wird, um dem Beobachter eine möglichst optimale Ablesbarkeit zu ermöglichen. In einem achten Schritt 18 wird abgefragt, ob bereits der Zielpunkt mit den Zielkoordinaten $x_{Ziel}$ und $y_{Ziel}$ erreicht ist. Sofern dies der Fall sein sollte, wird die Zielpunktverfolgung und Navigation als abgeschlossen definiert, was in Figur 2 durch "Ende" angedeutet ist. Nachfolgend wird die Abfrage wieder auf den Startpunkt zurückgesetzt. Sofern die Zielpunktabfrage negativ verläuft, also das Ziel bzw. der Zielpunkt noch nicht erreicht ist, wird weiterhin der maximale Skalierungsgrad der aktuellen Position nachgeführt. Dies ist ebenfalls in Figur 2 angedeutet.

In einer alternativen Ausführungsform kann die Darstellung des Ziels weggelassen werden. Außerdem kann eine Auswahl markanter Gebiete definiert werden, die ausschließlich in dem Bereich minimaler Auflösung bzw. den Randbereichen dargestellt werden, wie beispielsweise Flüsse, Waldgebiete etc.

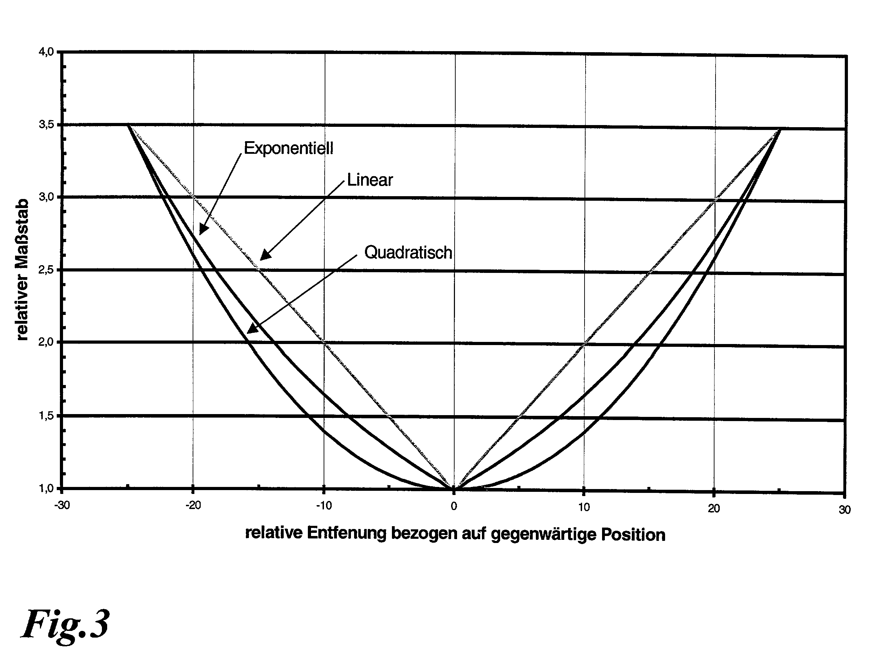

Figur 3 zeigt drei mögliche Abbildungsvorschriften zur Darstellung einer relativen Maßstabsänderung in Abhängigkeit von der relativen Entfernung bezogen auf die gegenwärtige Position. Gezeigt sind dabei eine exponentielle, eine lineare und eine quadratische Maßstabsänderung.

Neben den im vorstehenden beschrieben Ausführungsformen können noch weitere gebildet werden, bei denen jeweils aktuell für den Benutzer relevante Daten einer Vorrichtung zur Projektion von Navigationsdaten mit einer anderen Skalierung dargestellt werden, als die übrigen Daten der Projektion, wobei die Skalierung zwischen den unterschiedlichen Daten jeweils kontinuierlich und/oder schrittweise innerhalb der Projektion verändert oder veränderlich ist. Die Schrittweite kann dabei insbesondere durch den Benutzer selbst bestimmt werden oder ist durch entsprechende Funktionen in der Projektion vorgegeben bzw. wird durch diese automatisch eingestellt. Ein Teil der Daten bzw. Projektion wird dabei jeweils vergrößert dargestellt, wohingegen die übrigen im Normalformat oder sogar verkleinert dargestellt sein können.

**BEZUGSZEICHENLISTE**

| | |
|---|---|
| 1 | Vorrichtung |
| 2 | Projektion |
| 3 | Nahbereich |
| 4 | Zwischenbereich |
| 5 | Fernbereich |
| 6 | Maßstabsbalken |
| 7 | Maßstabsbalken |
| 8 | aktuelle Position |
| 9 | Fahrtroute |
| 10 | Ein-/Ausschalter |
| 11 | erster Schritt |
| 12 | zweiter Schritt |
| 13 | dritter Schritt |
| 14 | vierter Schritt |
| 15 | fünfter Schritt |
| 16 | sechster Schritt |
| 17 | siebter Schritt |
| 18 | achter Schritt |
| A | Anfangspunkt |
| Z | Zielpunkt |

**Patentansprüche**

1. Vorrichtung (1) zur Projektion von Navigationsdaten, insbesondere in einem Fahrzeug, wobei innerhalb der Projektion (2) Bereiche (3, 4, 5) mit unterschiedlicher Skalierung vorgesehen sind,
**dadurch gekennzeichnet, dass**
die Skalierung der Bereiche (3, 4, 5) sich kontinuierlich und/oder schrittweise innerhalb der Projektion (2) ändert.

**2.** Vorrichtung (1) nach Anspruch 1,
**dadurch gekennzeichnet, dass**
die Skalierung an die sich ändernde Position (8) dynamisch anpassbar ist.

**3.** Vorrichtung (1) nach Anspruch 1 oder 2,
**dadurch gekennzeichnet, dass**
zumindest ein Bereich (3) eine feinere Skalierung aufweist als andere diesen umgebende Bereiche (4, 5) der Projektion (2).

**4.** Vorrichtung (1) nach Anspruch 3,
**dadurch gekennzeichnet, dass**
der Bereich (3) mit der feinsten Skalierung ein Nahbereich, insbesondere die aktuelle Position (8) ist.

**5.** Vorrichtung (1) nach einem der vorstehenden Ansprüche,
**dadurch gekennzeichnet, dass**
eine lineare und/oder nichtlineare Änderung der Skalierung um zumindest einen Bereich (3), insbesondere den Nahbereich, herum vorgesehen ist.

**6.** Vorrichtung (1) nach einem der vorstehenden Ansprüche,
**dadurch gekennzeichnet, dass**
die Änderung der Skalierung um zumindest einen Bereich (3), insbesondere den Nahbereich, herum sich zirkular erstreckt.

**7.** Vorrichtung (1) nach einem der vorstehenden Ansprüche,
**dadurch gekennzeichnet, dass**
der Grad der Veränderung der Skalierung parametrisierbar und/oder einstellbar ist.

**8.** Vorrichtung (1) nach Anspruch 7,
**dadurch gekennzeichnet, dass**
der Grad der Veränderung zwischen 0 und 1 wählbar ist, insbesondere 0 eine nicht vorhandene Veränderung und 1 eine maximale Veränderung angibt.

**9.** Vorrichtung (1) nach einem der vorstehenden Ansprüche,
**dadurch gekennzeichnet, dass**
eine wählbare Maximalveränderung der Skalierung im Zentrum der Projektion (2) vorgesehen oder vorsehbar ist.

**10.** Vorrichtung (1) nach einem der vorstehenden Ansprüche,
**dadurch gekennzeichnet, dass**
eine Maßstabsanzeigeeinrichtung (6, 7), insbesondere ein Maßstabsbalken, Maßstabskreuz oder eine andere geeignete Maßstabsanzeigeeinrichtung, ausgehend von einem Bereich (3) in der Projektion (2) anzeigbar ist.

**11.** Vorrichtung (1) nach Anspruch 10,
**dadurch gekennzeichnet, dass**
die Maßstabsanzeigeeinrichtung (6, 7) von dem Bereich (3) mit der maximalen Veränderung, insbesondere dem Zentrum der Projektion (2), aus anzeigbar ist.

**Fig.1**

Entfernung Ziel: 12,3 km

START

11 — Projektion Karte mit aktueller Position

12 — Wähle Startkoordinaten und Zielkoordinaten

13 — Errechne optimale Route

14 — Wähle Skalierungsgrad max =1 Skalierungsgrad min = 0

15 — Setze aktuelle Position = Skalierungsgrad max = 1

16 — Skalierungsgrade $G_x(t)=F_X(t) \cdot x$ $G_y(t)=F_y(t) \cdot y$

17 — Skalierungsgrad max folge aktueller Position

nein

$x=x_{Ziel}$ ? $y=y_{Ziel}$ ?

ja

Ende

18

*Fig.2*

*Fig.3*